# EUROPÄISCHE PATENTANMELDUNG

(11) **EP 1 260 191 A2**
(43) Veröffentlichungstag der Anmeldung: **27.11.2002**
(21) Anmeldenummer: 02008053.7
(22) Anmeldetag: 11.04.2002
(51) Int. Cl.: A61C 8/00, A61C 13/225

(54) **Prothetischer Aufbau für Zahnimplantate**

(30) Priorität: 21.05.2001 DE 10124961
(71) Anmelder: Dr.-medic-stom./UMF Temeschburg, Herbert Hatzlhoffer, 76337 Waldbronn (DE)
(72) Erfinder: Dr.-medic-stom./UMF Temeschburg, Herbert Hatzlhoffer, 76337 Waldbronn (DE)
(74) Vertreter: Blumenröhr, Dietrich

(57) **Zusammenfassung**

Die Erfindung betrifft einen prothetischen Aufbau für Zahnimplantatsysteme, der mehrteilig ausgebildet ist, wobei die Festlegung der Einzelteile in lösbarer Weise erfolgt. Einerseits ist vorgesehen, die Festlegung über eine schraublose Steckverbindung zur Verfügung zu stellen; andererseits ist der mehrteilige Aufbau aus einem Stumpfkörper und einer separaten und am Stumpfkörper festlegbaren Stumpfbasis zusammengesetzt, die zur Festlegung des Aufbaus am Zahnimplantat dient.

## Beschreibung

Die Erfindung betrifft einen prothetischen Aufbau für Zahnimplantatsysteme aufweisend ein Verbindungsmittel zur Festlegung des Aufbaus am Zahnimplantat und eine aufgussfähige Kronenaufnahme. Prothetische Aufbauten sind die größtenteils außerhalb des Kieferknochens und oberhalb des Zahnfleischs liegenden Zahnimplantatsabschnitte, die über eine Steck- oder Schraubverbindung am eigentlichen in den Kieferknochen eingeschraubten Implantat festgelegt werden und auf die die Nachbildung der Zahnkrone aufmodelliert wird. In der Regel bieten die diversen Implantathersteller komplette Implantatsysteme an, bestehend aus den einzuschraubenden Implantaten und diversen Aufbau-Bausteinen wie Verschlussschrauben, Heilkappen, Transfersets und Ästhetik-Aufbauten.

In der Regel erst nachdem die Osseointegration stattgefunden hat, also das Implantat in den Kieferknochen eingeheilt und durch mehrwöchiges Knochenwachstum im Kieferknochen verankert worden ist, wird ein Ästhetikaufbau mit einer entsprechenden aufmodellierten Krone versehen und am Implantat festgelegt und kann von da an die Aufgaben eines natürlichen Zahns hinsichtlich all der ihm zugedachten Belastungsarten übernehmen. Es gibt aber auch Behandlungsmethoden, bei denen ein Implantat mit guter Primärstabilität gleich mit einem Aufbau versehen wird.

Hiervon ausgehend liegt der vorliegenden Erfindung nun die Aufgabe zugrunde, die bestehenden Implantatsysteme weiter zu verbessern und hierbei deren Qualität und Lebensdauer zu erhöhen.

Diese Aufgabe wird erfindungsgemäß dadurch gelöst, dass der Aufbau mehrteilig ausgebildet ist und dass die Festlegung der Einzelteile in lösbarer Weise erfolgt, wobei die erste erfindungsgemäße Ausführungsform zusätzlich dadurch gekennzeichnet ist, dass die Kronenaufnahme lösbar am Aufbau festlegbar ist, und dass die lösbare Festlegung über eine schraublose Steckverbindung erfolgt. Daneben ist eine zweite erfindungsgemäße Ausführungsform zusätzlich dadurch gekennzeichnet, dass der mehrteilige Aufbau aus einem die Kronenaufnahme aufweisenden Stumpfkörper und einer separaten und am Stumpfkörper festlegbaren Stumpfbasis besteht, die zu Festlegung des Aufbaus am Zahnimplantat dient.

Der erste Erfindungskomplex der steckbaren Kronenaufnahme besitzt den wesentlichen den Vorteil, dass die Krone zu einem späteren Zeitpunkt beliebig oft vom Aufbau entfernt werden kann, beispielsweise um hierdurch dem Zahnarzt eine optimierte Mundhygiene sowie Behandlung der das Implantat umgebenden Bereiche (beispielsweise während einer Prophylaxe-Behandlung) zu ermöglichen. Dadurch, dass die Steckverbindung schraublos ausgeführt ist, ist auch kein Schraubkanal (wie im Stand der Technik üblich) vorhanden, der dafür prädestiniert ist, Probleme zu bereiten, indem er beispielsweise eine nur undichte Verbindung zwischen Mundmilieu und Festlegungsschraube ermöglicht und hierdurch eine Verschmutzung bzw. Korrosion der Schraubverbindung vorprogrammiert sind. Zum anderen ist es auch äußerst aufwendig und mit erneuten Behandlungsarbeiten verbunden, wenn eine geschraubte Kronenaufnahme nach dem Einsetzen wieder entfernt werden soll. Aus diesen Gründen hat sich diese Art der Festlegung der Kronenaufnahme am Aufbau nicht bewährt, weshalb üblicherweise die Krone entweder direkt auf den Aufbau aufmodelliert bzw. aufgegossen wird oder aber eine die Krone tragende Kronenaufnahme am Aufbau festzementiert wird.

Zweckmäßigerweise besteht die Steckverbindung aus einem formschlüssig am Aufbau und an der Kronenaufnahme festlegbaren Verbindungsglied, das insbesondere magnetisch betätigbar ist, so dass das Verbindungsglied durch magnetische Betätigung in und/oder außer Eingriff mit der Kronenaufnahme und/oder dem Aufbau bringbar ist und hierbei zwischen einer Verrieglungsposition und einer Freigabeposition beweglich ist. Eine solche magnetische Betätigung hat den Vorteil, dass die Festlegungsmittel von der Krone bzw. der Kronenaufnahme gegenüber dem Mundmilieu abgeschottet werden können und somit keinen Korrosionseinflüssen unterliegen und dementsprechend zumindest nahezu wartungsfrei sind. Die hierbei verwendete quasi berührungslose Betätigung führt außerdem dazu, dass die Steckverbindung in Sekundenschnelle geöffnet und wieder geschlossen werden kann, wodurch ein Entfernen des Aufbaus vom Implantat entsprechend einfach und schnell sowie unkompliziert erfolgen kann.

Damit das Verbindungsglied auch von der Aufbauunterseite her gegenüber dem Mundmilieu abgedichtet ist, empfiehlt es sich, zwischen Aufbau und Implantat ein Dichtungselement, also beispielsweise einen Dichtungsring vorzusehen.

Was die Festlegung des Verbindungsglieds in der Verrieglungs- bzw. Freigabeposition betrifft, so ist hierfür zweckmäßigerweise vorgesehen, das Verbindungsglied durch Federmittel dauerhaft zu beaufschlagen und unter leicht form- bzw. reiboder kraftschlüssiger Verbindung in der jeweiligen Position festzulegen, wobei die Art der Festlegung durch die magnetische Betätigung überwindbar sein muss. In einem konkreten Ausführungsbeispiel ist hierfür vorgesehen, das Verbindungsglied mit zwei Vertiefungen zu versehen, die der Verriegelungsposition bzw. der Freigabeposition entsprechen, und diese Vertiefungen durch einen durch Federmittel vorgespannten Dorn zu beaufschlagen, der ein unbeabsichtigtes Wandern des Verbindungsgliedes von der Verriegelungs- in die Freigabeposition bzw. umgekehrt verhindert und aber auf der anderen Seite auch das beabsichtigte Verschieben des Verbindungsgliedes von der einen in die andere Position durch die magnetische Betätigung nicht behindert.

Der zweite Erfindungskomplex der separaten Stumpfbasis führt zu dem wesentlichen Vorteil, dass ein und derselbe Rest-Aufbau bestehend aus Stumpfkörper und Kronenaufnahme für verschiedenste Implantate diverser Hersteller sowie auch für verschiedenste Neigungswinkel verwendet werden kann, indem die Stumpfbasis ganz einfach als Adapter fungiert.

Bezüglich der Hersteller- bzw. Implantatvielfalt könnte man sich durch entsprechend aufwändige Lösungen wie das Zurverfügungstellen jeweils unterschiedlicher Aufbauten für unterschiedliche Hersteller behelfen; was aber die verschiedenen Neigungswinkel betrifft, so wäre es einfach zu teuer, für jeden möglichen Winkel zwischen den geläufigen 0° und 15° einen eigenen Aufbau zur Verfügung zu stellen, weshalb bis dato die unterschiedlichen Neigungswinkel eines Aufbaus gegenüber der Implantat- und Zahnachse dadurch erreicht wird, dass der Techniker ganz einfach von einem um 15° abgewinkelten bzw. von einem unabgewinkelten Aufbau mehr oder weniger große Teile von Hand wegfräst, um dann mehr schlecht als recht die Kronenaufnahme auf den verbliebenen Rest-Aufbau aufzusetzen und durch Zement dort zu fixieren. Es ist unschwer erkennbar, dass eine solche Art der Anpassung von Implantatsystemen an die geometrischen Einbauverhältnisse alles andere als fachmännisch ist und dass dementsprechend Probleme hinsichtlich der Stabilität und Lebensdauer eines solchen Implantats vorprogrammiert sind. Natürlich ist es auch bei einer solchen einzementierten Lösung unmöglich, die Kronenaufnahme beispielsweise für eine zahnärztliche Behandlung zu entfernen.

Zweckmäßigerweise erfolgt die Festlegung der Stumpfbasis am Stumpfkörper über eine Schraubverbindung; ebenso sind aber auch andere geläufige Festlegungsarten möglich. Die Schraubverbindung sollte dabei so ausgestaltet sein, dass ein Lockern bzw. Lösen der Stumpfbasis vom Stumpfkörper - zumindest unbeabsichtigt - nicht möglich ist.

Wie bereits erwähnt, dient die Stumpfbasis vorteilhafterweise als Winkeladapter zwischen der Implantatsmittelachse und der Stumpfkörpermittelachse, so dass durch die Stumpfbasis der Winkel zwischen den Mittelachsen des Implantats und des Stumpfkörpers einstellbar ist und dementsprechend beispielsweise für jeden ganzzahligen Winkel zwischen 0° und 15° ein eigener Winkeladapter zur Verfügung gestellt wird.

Schließlich kann auch die Festlegung der Stumpfbasis am Zahnimplantat über eine Schraubverbindung erfolgen oder zumindest in gleicher Weise, wie bisher Aufbauten an Implantaten festgelegt wurden. Die Mehrteilung des Aufbaus ändert diesbezüglich weder an den hierfür erforderlichen Implantaten noch an den Festlegungsmitteln zwischen Aufbau und Implantat etwas.

Weitere Merkmale und Vorteile der vorliegenden Erfindung ergeben sich aus der nachfolgenden Beschreibung von Ausführungsbeispielen anhand der Zeichnung; hierbei zeigen
- Figur 1: einen erfindungsgemäßen prothetischen Aufbau im Längsschnitt;
- Figur 2: eine zu dem prothetischen Aufbau aus Figur 1 passende Kronenaufnahme im Längsschnitt;
- Figur 3: eine alternative Ausführungsform eines prothetischen Aufbaus im Längsschnitt;
- Figur 4: ein Verbindungsglied zur Festlegung der Kronenaufnahme am prothetischen Aufbau in verschiedenen Ansichten;
- Figuren 5-7: diverse Einzelteile und Ansichten eines Verriegelungselementes für das Verbindungsglied;
- Figuren 8 und 9: einen Stumpfkörper als Teil eines alternativen prothetischen Aufbaus im Längsschnitt bzw. in stirnseitiger Draufsicht;
- Figur 10: eine Stumpfbasis als Teil eines alternativen prothetischen Aufbaus im Längsschnitt;
- Figur 11: eine alternative Bauform einer Stumpfbasis im Längsschnitt; und
- Figuren 12 und 13: eine zu dem prothetischen Aufbau aus Figur 8 passende Kronenaufnahme im Längsschnitt und in stirnseitiger Draufsicht.

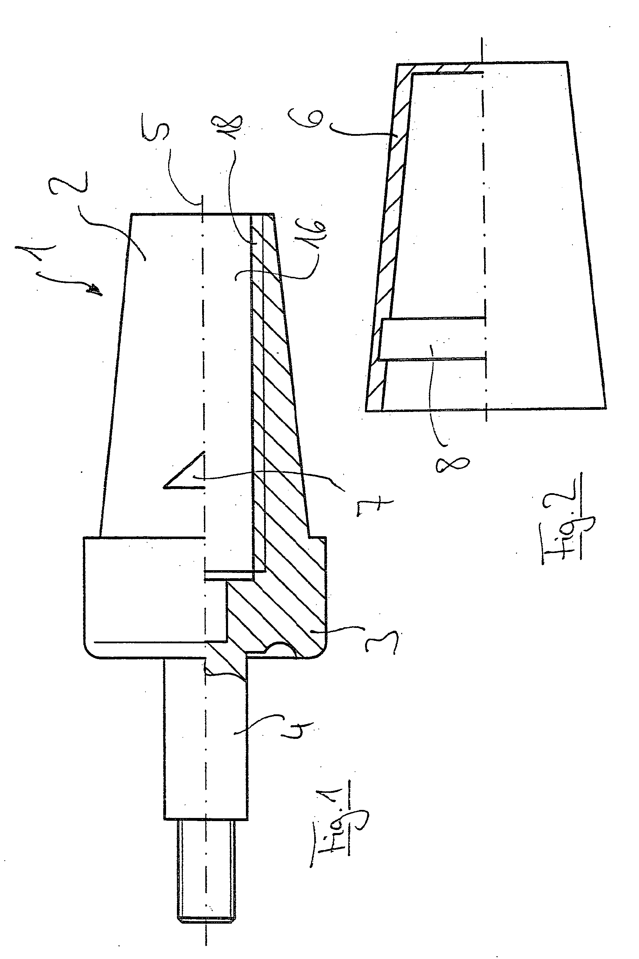

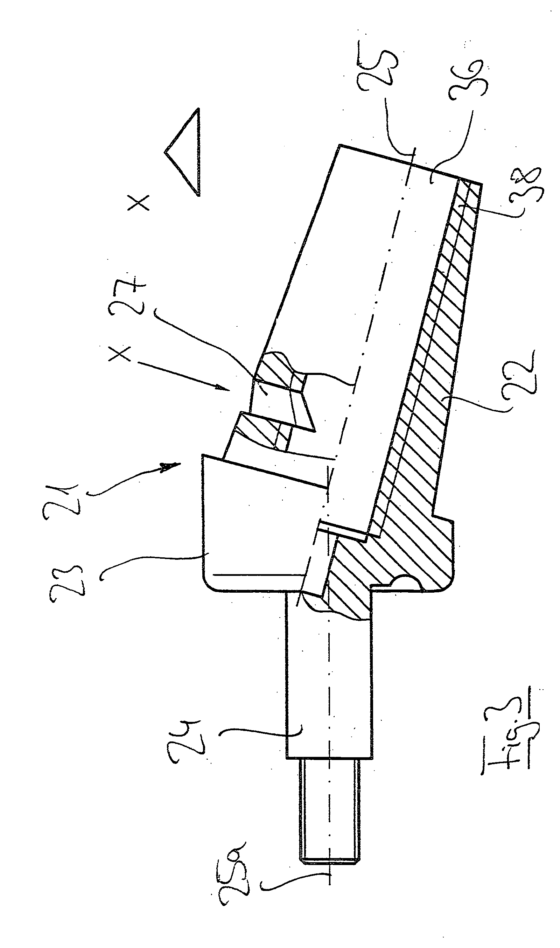

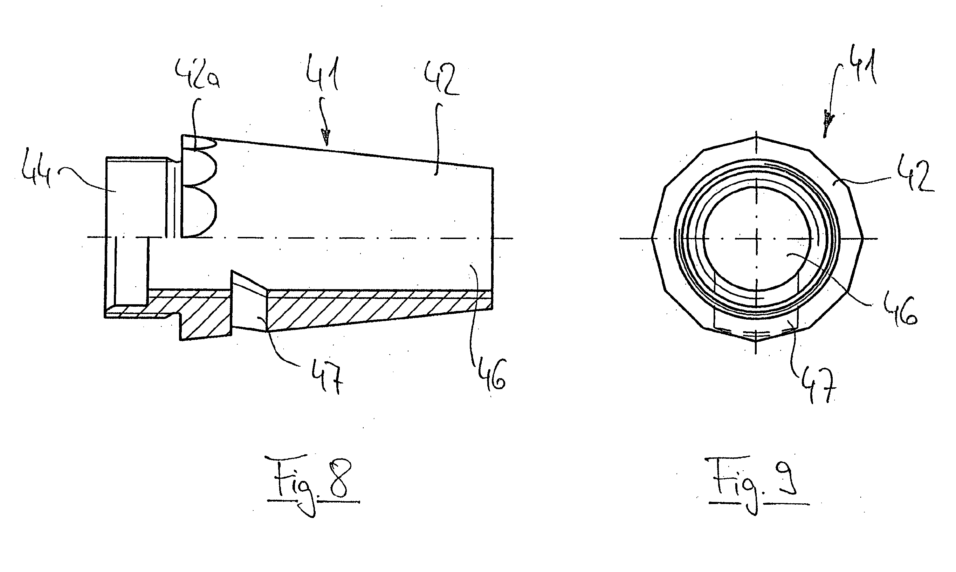

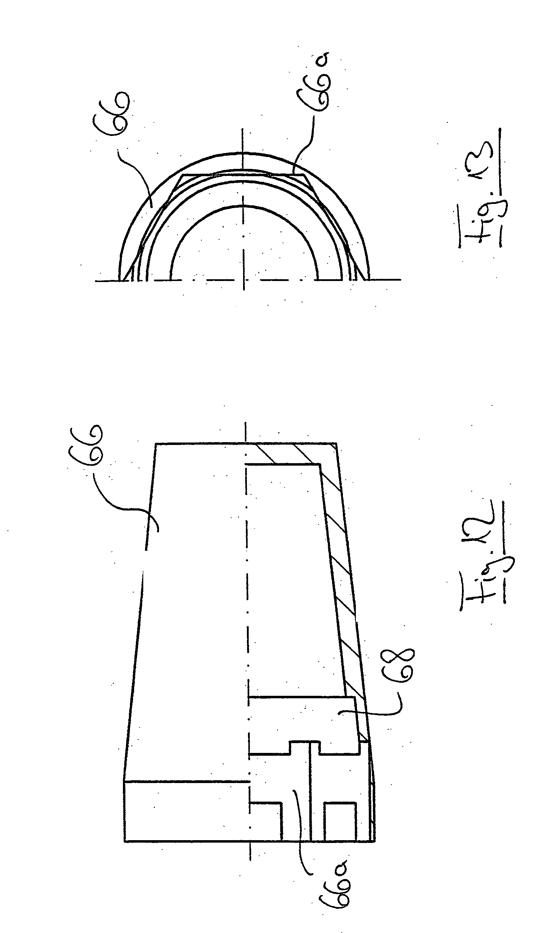

In Figur 1 ist ein prothetischer Aufbau 1 im Längsschnitt gezeigt, der im wesentlichen aus einem konischen Stumpfkörper 2 und einer zylindrischen an den Stumpfkörper angefügten Stumpfbasis 3 besteht, welche ein Verbindungsmittel 4 in Form einer Aufbautenschraube trägt, um den prothetischen Aufbau an einem (nicht dargestellten) Zahnimplantat festzulegen. Stumpfkörper, Stumpfbasis und Aufbautenschraube sind im Falle der Figur 1 einstückig miteinander verbunden und hintereinander entlang einer Aufbautenmittelachse 5 angeordnet. Ebenso können diese Teile aber auch einzeln ausgeführt sein; ein solches Beispiel ist in den Figuren 8 bis 13 dargestellt. Die Basis des konischen Stumpfkörpers 2, also der Bereich des Konus mit dem größten Durchmesser, ist gegenüber dem Durchmesser der zylindrischen Stumpfbasis 3 nach innen versetzt, um so ausreichend Platz für ein bündiges Aufstecken einer in Figur 2 dargestellten Kronenaufnahme 6 zu bieten.

Die Kronenaufnahme 6 ist aus einem ebenfalls konischen Rohrkörper gebildet und in ihrer Abmessung so ausgestattet, dass sie auf den konischen Stumpfkörper 2 soweit aufsteckbar ist, bis ihre Innenfläche an der Außenfläche des Stumpfkörpers 2 sowie ihre Stirnfläche an der zylindrischen Stumpfbasis 3 anliegt. So ist eine ausreichend stabile und dauerhafte Kraftübertragung von der Krone auf das Implantat und somit den Kieferknochen möglich.

Die Kronenaufnahme, auf die die nachgebildete Zahnkrone aufmodelliert bzw. aufgegossen wird, ist erfindungsgemäß als separates Einzelteil und lösbar vom Rest des prothetischen Aufbaus ausgebildet und kann demgemäss für eine zahnärztliche Behandlung abgenommen werden, was die Zugänglichkeit zu den benachbarten Zähnen im Bereich der Zahnzwischenräume sowie auch zu dem das Implantat umgebenden Zahnfleisch wesentlich verbessert.

Damit diese Lösbarkeit keine Probleme, wie das Einbringen eines separaten Schraubkanals sowie die hierdurch verursachte Anfälligkeit gegen Krankheitsbefall verursacht, ist erfindungsgemäß vorgesehen, die lösbare Festlegung über eine schraublose Steckverbindung zur Verfügung zu stellen. Denn dann gibt es keinen von außen zugänglichen Schraubkanal, der beispielsweise mit Kunststoff ausgefüllt werden müsste, um ein einem natürlichen Zahn ähnelndes geschlossenes Äußeres zu ermöglichen.

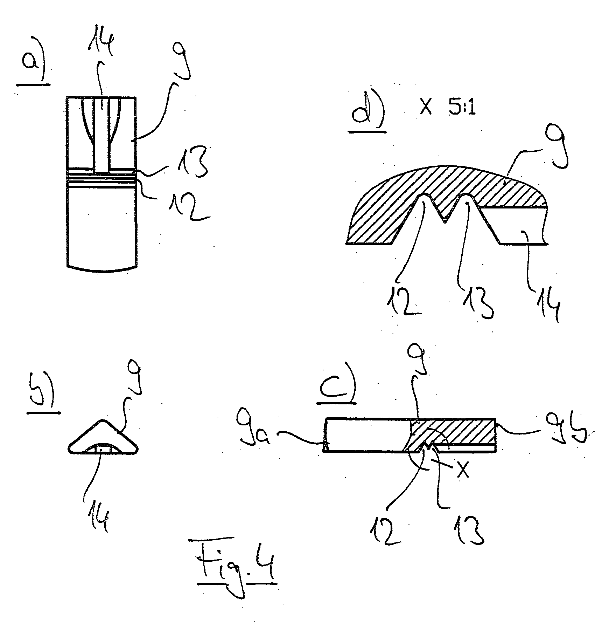

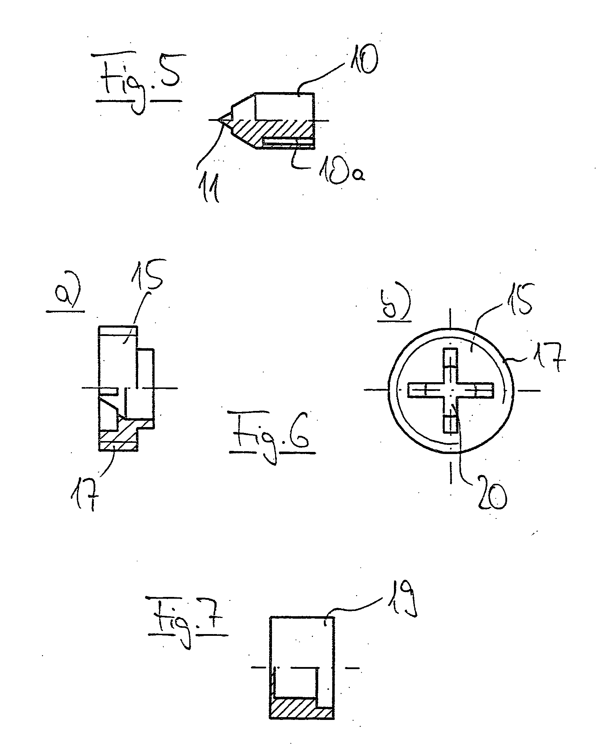

Die schraublose Steckverbindung besteht aus einem in Figur 4 dargestellten Verbindungsglied 9, das sich ausgehend von einer dreieckförmigen Aussparung 7 im Stumpfkörper 2 in eine umlaufende Nut 8, welche auf der Innenseite der Kronenaufnahme 6 vorgesehen ist, erstreckt und somit beide Teile, also Stumpfkörper 2 und Kronenaufnahme 6 in Axialrichtung gegeneinander formschlüssig verriegelt und festlegt. Entsprechend der dreieckförmigen Aussparung 7 und der stirnseitigen Draufsicht in Figur 4 b) ist das Verbindungsglied 9 zylindrisch mit dreieckigem Querschnitt über die axiale Länge ausgebildet und kann so behinderungsfrei durch die Aussparung 7 verschoben werden und beim Eintauchen in die Nut 8 die Verriegelung und bei einem Heraustauchen aus der Nut 8 die Freigabe der Kronenaufnahme gegenüber dem Stumpfkörper zur Verfügung stellen.

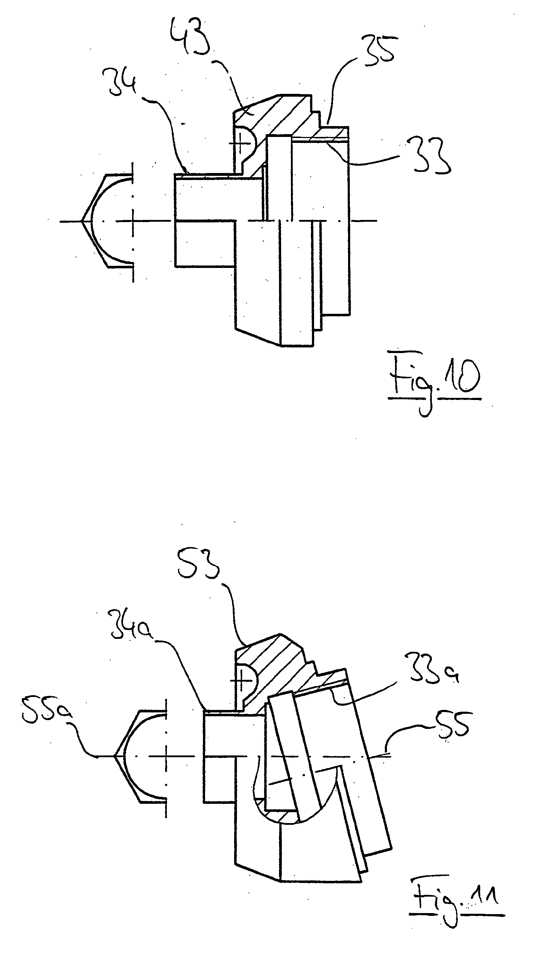

Um diese Verriegelungsposition bzw. die Freigabeposition dauerhaft einnehmen zu können, wirkt das Verbindungsglied 9 mit einem durch ein (nicht dargestelltes) Federmittel vorgespannte Verriegelungselement 10 (siehe Figur 5) zusammen, welches das Verbindungsglied 9 auf seiner Unterseite beaufschlagt und mit seiner stirnseitigen Spitze 11 in Vertiefungen 12, 13 des Verbindungselementes eintaucht, je nach dem in welcher Axialposition das Verbindungselement gerade befindlich ist.

Das in Figur 4 dargestellte Verbindungselement 9 zeigt in Figur 4 c) im teilweisen Längsschnitt die beiden Vertiefungen 12 und 13 sowie benachbart dazu eine Nut 14, durch die das Einstecken und Montieren sowie auch Demontieren des Verbindungselementes in den Stumpfkörper 2 bei gleichzeitiger Beaufschlagung durch das Verriegelungselement 10 bzw. dessen Spitze 11 von unten vereinfacht wird. Die Spitze 11 des Verriegelungselementes 10 beaufschlagt somit das Verbindungsglied 9 entlang dieser nutförmigen Aussparung 14 und taucht bei vollständig in den Stumpfkörper 2 eingestecktem Verbindungsglied 9 in die linke - bezogen auf Figur 4c) - Vertiefung 12 ein. Anschließend kann die Kronenaufnahme 6 auf den Stumpfkörper 2 aufgesteckt werden.

Wird nun durch einen Magneten, der in etwa fluchtend zum linken - bezogen auf Figur 4c) - Ende 9a des Verbindungsgliedes 9 angeordnet ist, das Verbindungsglied 9 in Richtung des Magneten angezogen, so taucht das Verbindungsglied aus der Aussparung 7 gegenüber dem Stumpfkörper 2 heraus und steht in die nutförmige Aussparung 8 der Kronenaufnahme 6 vor, um beide gegeneinander zu verriegeln. Diese Verschiebebewegung erfolgt unter Überwindung des Formschlusses zwischen dem Verriegelungselement 10 und der Vertiefung 12 des Verbindungselementes, indem das Verrieglungselement 10 entgegen der Federvorspannung weg vom Verbindungselement 9 gedrückt wird und anschließend in die rechte Vertiefung - bezogen auf Figur 4c) - eintaucht und dort durch das Federmittel wieder für die Festlegung des Verbindungsgliedes in der gewünschten Axialposition sorgt.

Will man nun die Verriegelung zwischen Kronenaufnahme und Stumpfkörper wieder aufheben, so muss das Magnet auf der gegenüberliegenden Seite des Verbindungselementes 9 an die Krone angelegt werden, also benachbart zum rechten-bezogen auf Figur 4c) - Ende 9b des Verbindungsgliedes 9, um hierdurch wieder das Verriegelungselement 10 außer Eingriff mit der Vertiefung 13 zu bringen, das Verbindungsglied 9 nach rechts zu verschieben und hierdurch den Formschluss mit der Nut 8 aufzuheben.

In Figur 6 ist ein Halteelement 15 in Draufsicht sowie im Längsschnitt dargestellt, das in eine im Stumpfkörper 2 vorgesehene zylindrische Bohrung 16 vom konisch verjüngten Ende her eingeschraubt wird. Hierzu ist das Halteelement 15 mit einem Außengewinde versehen und die Bohrung 16 mit einem Innengewinde. Vor dem Einschrauben des Halteelements werden jedoch folgende Bauteile am Halteelement festlegt: Eine Distanzhülse 19, die sicherstellt, dass sich später das Verriegelungselement 10 im richtigen Abstand vom Grund der Bohrung 16 und in der richtigen Höhenposition gegenüber dem Verbindungsglied 9 befindet und zwischen Verriegelungselement und Distanzhülse eine (nicht dargestellte) Spiralfeder, die in eine zylindrische Ringnut 10a des Verriegelungselements eintaucht und dieses in Richtung des offenen Endes elastisch drückt. Das Paket aus Halteelement 15 und aufgesteckter Distanzhülse 19 sowie dazwischen gekapseltem Verriegelungselement 10 und Spiralfeder werden in die Bohrung 16 bis zum Bohrungsgrund eingeschraubt mit dem spitz zulaufenden Dorn 11 in Richtung des offenen Bohrungsendes zeigend, der durch eine schlitzförmige Aussparung 20 des Halteelements 15 hindurchtaucht und gegenüber der Oberseite des Halteelements 15 vorsteht, um das Verbindungsglied in der zuvor beschriebenen Art und Weise zu beaufschlagen und in den Vertiefungen 12 und 13 festzulegen.

Die nicht gezeigte Spiralfeder sorgt somit dafür, dass das Verbindungsglied durch das Verriegelungselement entweder in der Verriegelungsposition oder in der Freigabeposition gehalten wird.

Der gleiche Verriegelungsmechanismus aus Verbindungsglied, Verriegelungselement und dem zugehörigen Halteelement sowie der Distanzhülse finden auch bei einem prothetischen Aufbau 21 Anwendung, der in Figur 3 im Längsschnitt dargestellt ist. Gegenüber dem prothetischen Aufbau 1 aus Figur 1 weist der Aufbau 21 den Unterschied auf, dass der Anschluss des konischen Stumpfkörpers 22 an der zylindrischen Stumpfbasis 23 schrägwinklig erfolgt. wodurch die Aufbautenmittelachse 25 geneigt zur von der Aufbautenschraube 24 repräsentierten Implantatsachse 25 a angeordnet ist. Eine solche Schrägstellung ist erforderlich, um die Orientierung des Aufbaus an die jeweiligen Einbauverhältnisse, also die Orientierung der Nachbarzähne etc. zu ermöglichen.

Auch der prothetische Aufbau 21 weist im übrigen eine zylindrische Bohrung 36 zum Einsetzen des Verbindungs- und Verriegelungsmechanismusses auf und ist dazu vorgesehen, mit der Kronenaufnahme 6 aus Figur 2 zusammenzuwirken.

Der zweite erfindungswesentliche Komplex ergibt sich aus den Figuren 8 bis 11 und zeigt einen prothetischen Aufbau 41, der neben einem Stumpfkörper 42 (siehe Figur 8 und 9) eine separate Stumpfbasis 43 (siehe Figur 10) bzw. 53 (siehe Figur 11) umfasst. Wie vorstehend beschrieben, erhält man durch die Trennung des Stumpfkörpers von der Stumpfbasis die Möglichkeit, dass die Stumpfbasis eine Adaption an unterschiedliche Implantate ermöglicht (die Implantate unterschiedlicher Hersteller sind in der Regel mit unterschiedlichen Anschlussmöglichkeiten versehen, weshalb die Aufbauten üblicherweise nur zu jeweils einem Implantat passen). Darüber hinaus ermöglicht die separate Stumpfbasis einen abgewinkelten prothetischen Aufbau mit relativ einfachen Mitteln zur Verfügung zu stellen, indem nicht für jeden gewünschten Winkel ein separater kompletter Aufbau erforderlich ist, sondern bei gleichbleibendem Stumpfkörper allein die Neigungseinstellung über die Stumpfbasis erfolgt.

Nun etwas detaillierter zum Stumpfkörper 42 aus Figur 8 (Längsschnitt) bzw. Figur 9 (Draufsicht): Der Stumpfkörper 42 ist wiederum konisch ausgeführt mit einer zylindrischen Innenbohrung 46 zur Aufnahme des in den Figuren 4 bis 7 dargestellten Verbindungs- und Verriegelungsmechanismus, wozu er auch mit einer dreieckigen Aussparung 47 versehen ist, die das Verbindungsglied 9 in der zuvor geschilderten Art und Weise aufnimmt.

An der Basis des Stumpfkörpers 42, also dem Abschnitt mit dem größten Außendurchmesser, ist die konische Außenform mit zwölf Segmentflächenabschnitten 42a versehen, um es beispielsweise einer Zange oder einem Schraubschlüssel zu ermöglichen. den Stumpfkörper gegenüber der Stumpfbasis zu verdrehen und hierdurch an der Stumpfbasis festzulegen bzw. von dieser loszulösen. Die Verbindung des Stumpfkörpers 42 mit der Stumpfbasis 43 bzw. 53 erfolgt über einen benachbart zu der Basis 42a des Stumpfkörpers 42 vorgesehenen Gewindeflansch 44, der in eine entsprechende mit einem Innengewinde versehende Bohrung 33 der Stumpfbasis eingreift und durch die Schraubverbindung den Stumpfkörper 42 an der Stumpfbasis 43 festlegt. Zum Anschluss an das jeweilige (nicht dargestellte) Implantat weist schließlich die Stumpfbasis 43 einen Anschlussflansch 34 auf, der auf der Außenseite eine - im vorliegenden Beispiel durch einen Sechskant gebildete - Verdrehsicherung, die mit einer entsprechend ausgebildeten Aussparung im Implantat zusammenwirkt, und auf der Innenseite eine Bohrung zum Durchstecken einer (nicht dargestellten) Aufbautenschraube aufweist.

Schließlich ist auf der dem Implantatsanschluss 34 gegenüberliegenden Ende der Stumpfbasis 43 auf der Außenseite eine umlaufende Vertiefung 35 vorgesehen, auf die ein (nicht dargestellter) Dichtring aufgesteckt werden kann, um den Anschlussbereich zwischen Stumpfkörper und Stumpfbasis gegenüber dem Mundmilieu abzudichten und hierdurch den Verbindungs- und Verriegelungsmechanismus vor Verschmutzung bzw. Korrosion zu schützen.

Die in Figur 11 dargestellte Stumpfbasis 53 unterscheidet sich - wie bereits erwähnt - von der Stumpfbasis 43 aus Figur 10 dadurch, dass der Implantatsanschluss 34a so gegenüber der Bohrung 33a zur Aufnahme des Gewindeflansches 44 des Stumpfkörpers 42 abgewinkelt ist, dass die Aufbautenmittelachse 55 gegenüber der Implantatsmittelachse 55a geneigt verläuft.

In den Figuren 12 und 13 ist eine Kronenaufnahme 66 im Längsschnitt bzw. in stirnseitiger Draufsicht dargestellt, die dazu vorgesehen ist, auf den Stumpfkörper 42 aus Figur 8 aufgesteckt zu werden. Die Kronenaufnahme 66 ist im wesentlichen wie die Kronenaufnahme 6 ausgebildet und aus einem konischen Rohrkörper gebildet. Ein wesentlicher Unterschied besteht jedoch darin, dass die Kronenaufnahme 66 an ihrer Basis, also dem Abschnitt mit dem größten Außendurchmesser, teilweise zylindrisch mit diesem größten Außendurchmesser ausgeführt ist und auf ihrer Innenseite sechs Segmentflächenabschnitte 66a aufweist, die mit den zwölf Segmentflächenabschnitten 42a des Stumpfkörpers 42 eine formschlüssige Verbindung eingehen, indem sie in Anlage an ihre sechs dieser zwölf Segmentflächenabschnitte 42a gebracht werden können. Hierdurch ist eine Verdrehsicherung der Kronenaufnahme 66 gegenüber dem Stumpfkörper 42 bzw. dem prothetischen Aufbau 41 gegeben. Ansonsten weist die Kronenaufnahme 66 noch eine umlaufende Nut 68 auf, die entsprechend der Nut 8 der Kronenaufnahme 6 auf der Innenseite der Kronenaufnahme vorgesehen ist und zur Beaufschlagung durch das Verbindungsglied 9 und somit zur Verriegelung bzw. Freigabe der Kronenaufnahme gegenüber dem Stumpfkörper dient.

Es sei noch erwähnt, dass natürlich auch eine Kombination beider Erfindungsteilkomplexe in einem Gegenstand, also einem prothetischen Aufbau möglich sind.

Zusammenfassend bietet die vorliegende aus zwei unterschiedlichen Varianten bestehende Erfindung den Vorteil, dass einerseits die Krone in einfacher Art und Weise von dem zugehörigen Aufbau auch nachträglich noch entfernt werden kann, wodurch Zahnbehandlung und Mund- bzw. Zahnreinigung (im Zuge beispielsweise einer Prophylaxebehandlung) wesentlich verbessert und vereinfacht wird, und dass zum anderen der prothetische Aufbau durch seine Modularität ohne allzu großen Aufwand mit einer weitaus größeren Variantenvielfalt und beispielsweise mit unterschiedlichen Neigungswinkeln zur Verfügung gestellt werden kann bzw. dass die Modularität es ermöglicht, dass ein Aufbau auch auf das Implantat eines anderen Herstellers aufgesetzt werden kann, wodurch sogar der erfindungsgemäße prothetische Aufbau nachträglich noch zum Einsatz gelangen kann.

## Patentansprüche

1. Prothetischer Aufbau für Zahnimplantatsysteme mit einem Verbindungsmittel (4, 24, 34, 34 a) zur Festlegung des Aufbaus (1, 21, 41) an einem in einen Kieferknochen einzusetzenden Implantat und mit einer aufgussfähigen Kronenaufnahme (6),
**dadurch gekennzeichnet,**
**dass** der Aufbau mehrteilig ausgebildet ist und dass die Festlegung der Einzelteile in lösbarer Weise erfolgt.

2. Prothetischer Aufbau nach Anspruch 1,
**dadurch gekennzeichnet,**
**dass** die Kronenaufnahme (6) lösbar am Aufbau (1, 21) festlegbar ist, und dass die lösbare Festlegung über eine schraublose Steckverbindung erfolgt.

3. Prothetischer Aufbau nach Anspruch 2,
**dadurch gekennzeichnet,**
**dass** die Steckverbindung aus einem formschlüssig am Aufbau (1, 21) und an der Kronenaufnahme (6) festlegbaren Verbindungsglied (9) besteht.

4. Prothetischer Aufbau nach Anspruch 3,
**dadurch gekennzeichnet,**
**dass** das Verbindungsglied (9) magnetisch betätigbar ist.

5. Prothetischer Aufbau nach zumindest Anspruch 3,
**dadurch gekennzeichnet,**
**dass** das Verbindungsglied (9) durch magnetische Betätigung in und/oder außer Eingriff mit der Kronenaufnahme (6) und/oder dem Aufbau (1, 2, 21, 22) bringbar ist.

6. Prothetischer Aufbau nach zumindest Anspruch 3,
**dadurch gekennzeichnet,**
**dass** das Verbindungsglied (9) zwischen einer Verriegelungsposition und einer Freigabeposition beweglich ist.

7. Prothetischer Aufbau nach Anspruch 6,
**dadurch gekennzeichnet,**
**dass** das Verbindungsglied (9) durch Federmittel in der Verriegelungsposition und in der Freigabeposition arretierbar ist.

8. Prothetischer Aufbau nach zumindest Anspruch 1,
**dadurch gekennzeichnet,**
**dass** der mehrteilige Aufbau (41) aus einem die Kronenaufnahme aufweisenden Stumpfkörper (42) und einer separaten und am Stumpfkörper festlegbaren Stumpfbasis (43, 53) besteht, die zur Festlegung des Aufbaus (41) am Zahnimplantat dient.

9. Prothetischer Aufbau nach zumindest Anspruch 8,
**dadurch gekennzeichnet,**
**dass** die Festlegung der Stumpfbasis (43, 53) am Stumpfkörper (42) über eine Schraubverbindung (44, 33, 33 a) erfolgt.

10. Prothetischer Aufbau nach zumindest Anspruch 8,
**dadurch gekennzeichnet,**
**dass** die Stumpfbasis (53) als Winkeladapter zwischen der Implantatsmittelachse (55 a) und der Stumpfkörpermittelachse (55) dient, und dass durch die Stumpfbasis der Winkel zwischen den Mittelachsen des Implantats und des Stumpfkörpers einstellbar ist.

11. Prothetischer Aufbau nach zumindest Anspruch 8,
**dadurch gekennzeichnet,**
**dass** die Festlegung der Stumpfbasis (43, 53) am Zahnimplantat über eine Schraubverbindung erfolgt.
